# EUROPEAN PATENT APPLICATION

(11) **EP 4 321 365 A1**
(43) Date of publication of application: **14.02.2024**
(21) Application number: 23183769.1
(22) Date of filing: 06.07.2023
(51) Int. Cl.: B60L 3/10, B60L 15/20, B60L 15/32

(54) **METHOD AND DEVICE FOR ANTI-SLIP CONTROL OF TORQUE BETWEEN ELECTRIC DRIVE AXLE SHAFTS OF MULTI-SHAFT VEHICLE**

(30) Priority: 10.08.2022 CN 202210955540
(71) Applicant: Robert Bosch GmbH, 70442 Stuttgart (DE)
(72) Inventor: LI, Qingfeng, Wuxi, Jiangsu, 214028 (CN); Lin, Weiqing, Wuxi City, 214028 (CN); HU, Feng, Wuxi, Jiangsu, 214028 (CN); Wu, Jinwei, Wuxi, Jiangsu, 214028 (CN)

(57) **Abstract**

The present invention provides a method and device for anti-slip control of torque between electric drive axle shafts of a multi-shaft vehicle, wherein a non-drive shaft or the drive shaft with the lowest rotation speed is selected as a reference shaft, a determination is made as to whether the vehicle is in a state of starting to move or a travelling state by judging whether the rotation speed of the reference shaft is greater than a predetermined rotation speed value; in a state of starting to move, a judgement is made as to whether a rotation speed difference between each drive shaft and the reference shaft is greater than a predetermined threshold, to determine whether each drive shaft is in a slipping state, and when the drive shaft is in a slipping state, a slip rate of each drive shaft is kept within a predetermined optimal slip rate range by torque transfer or torque reduction. In a travelling state, a judgement is made as to whether a slip rate of each drive shaft is greater than a predetermined optimal slip rate, to determine whether each drive shaft is in a slipping state, and when the drive shaft is in a slipping state, the slip rate of each drive shaft is kept within a predetermined optimal slip rate range by torque transfer or torque reduction. In this way, real-time, rational distribution of torque between electric drive axle shafts of the multi-shaft vehicle is achieved; moreover, when all of the multiple drive shafts of the vehicle are slipping, torque redistribution can be achieved, thereby making full use of the road surface adhesion coefficient of each shaft, and improving the vehicle's ability to cross terrain.

## Description

### Technical field

The present invention relates to the field of vehicle transmission control, in particular to a method and device for anti-slip control of torque between electric drive axle shafts of a multi-shaft vehicle, a storage medium and a program product.

### Background art

Multi-shaft-drive vehicles are powerful, highly capable of crossing terrain, and have an even shaft load distribution, so are widely used as tractors, dump trucks and other heavy goods vehicles. With the development of commercial vehicle electrification, multi-shaft-drive vehicles are evolving from traditional mechanical drive (engine, gearbox and multiple linked axles) to electric drive (battery, fuel cell engine and electric drive axle).

Traditional mechanical drive in a multi-shaft-drive vehicle relies on differentials to coordinate the rotation speed of each wheel with the corresponding vehicle speed. In the case of a multi-shaft-drive vehicle using electric drive, due to the absence of the inter-axle differential structure of traditional multiple linked axles, there is no mechanical connection between the wheels, whose motion states are therefore independent of each other. To guarantee the rotation direction, or ensure that no slip occurs between driving wheels when travelling on an uneven road surface (which would cause the vehicle to lose ground traction and also cause excessive tyre wear), it is necessary to use a precise model or an effective strategy to perform differential control, in order to achieve the transformation from hardware inter-shaft differential control to software inter-shaft differential control.

Chinese invention patent CN109130888A has disclosed a dual-motor distributed four-wheel-drive system control method, the system structure comprising: an energy storage apparatus and a control unit, a drive unit A, a drive unit B, a transmission apparatus, a speed reduction apparatus and a differential apparatus; the control method comprises: an economy distribution sub-function, a longitudinal distribution sub-function, a transverse distribution sub-function, a steady-state distribution arbitration sub-function, a front shaft slip rate computing sub-function, a rear shaft slip rate computing sub-function, an anti-slip control sub-function and a torque demand computing sub-function. The economy distribution sub-function, taking into account the efficiency characteristics of front and rear electric axles, computes all discrete operating condition points of a vehicle within the range from stationary to maximum vehicle speed and within the range from no drive torque to maximum drive torque, by a global optimization method, and synthesizes the front-rear axle distribution ratio that has optimal efficiency. The longitudinal distribution sub-function suitably distributes the torque output ratio of the front and rear electric axles, so that the vehicle can optimize the overall adhesion of the four wheels as far as possible in different wheel-end torque output scenarios. The transverse distribution sub-function ensures that the vehicle has good manoeuvrability when going through a bend or travelling in a bend, and ensures sufficient stability. The steady-state distribution arbitration sub-function performs arbitration, by a given algorithm, on a front-rear axle torque distribution ratio obtained by the economy distribution sub-function, a front-rear axle torque distribution ratio obtained by the longitudinal distribution sub-function, and a front-rear axle torque distribution ratio obtained by the transverse distribution sub-function, thereby obtaining a unique front-rear axle torque steady-state distribution ratio. The front shaft slip rate computing sub-function, by comparing a front drive shaft actual rotation speed with a predicted front drive shaft rotation speed computed on the basis of a rear drive shaft rotation speed, computes a slip rate of the front drive shaft relative to the rear drive shaft. The rear shaft slip rate computing sub-function, by comparing a rear drive shaft actual rotation speed with a predicted rear drive shaft rotation speed computed on the basis of a front drive shaft rotation speed, computes a slip rate of the rear drive shaft relative to the front drive shaft. The anti-slip control sub-function subjects the front and rear axles to anti-slip control, i.e. adjusts the torque percentages, according to the slip rates of the front and rear drive shafts which reflect the extent of slippage of the front and rear shafts. The torque demand computing sub-function computes the torque demand of the front and rear electric axles according to the wheel-end torque demand and the front and rear shaft torque percentages.

A dual-motor distributed four-wheel-drive system control method disclosed in CN109130888A takes into account the high efficiency of a system of front and rear electric axles, and thus obtains the distribution with optimal economy in all operating conditions within the entire vehicle speed and entire torque ranges, by a global optimization method; with reference to a vehicle slip resistance torque curve and a vehicle external characteristic curve, torques at different drive torques of the vehicle are distributed, thereby optimizing the overall adhesion of the four wheels of the vehicle; by using a weighted arbitration method to subject an economy distribution ratio and a longitudinal distribution ratio to arbitration, both economy and drivability can be taken into account, so that economy is optimal when the vehicle is travelling at a uniform speed in a steady state, and drivability is optimal during acceleration and deceleration; based on steering wheel rotation angle and transverse distribution of vehicle speed, the stability of the vehicle when cornering and travelling along a bend is ensured, and the rear axle torque percentage changes as the steering wheel changes, while a method having a certain degree of hysteresis results in the vehicle taking both manoeuvrability and stability into account; the rotation speeds of the front and rear drive shafts are used to compute relative slip rates and anti-slip control is performed on this basis, so that slippage of the slipping shaft can be promptly suppressed, while the transfer of torque to the other shaft enables the vehicle to get out of trouble quickly. However, this method has the following shortcomings: it fails to provide a concrete explanation of how to adjust the torque percentage, so those skilled in the art are unable to implement the technical solution without inventive effort, and unable to perform torque redistribution when both the front and rear drive shafts of the vehicle slip.

### Summary of the invention

An objective of the present invention is to provide a practical and reliable method and device for control of torque between electric drive axle shafts of a multi-shaft vehicle, a storage medium and a program product, wherein the multi-shaft vehicle comprises multiple drive shafts. Under the operating conditions of starting to move and normal travel, real-time, rational distribution of torque between electric drive axle shafts of the multi-shaft vehicle is achieved; moreover, when all of the multiple drive shafts of the vehicle are slipping, torque redistribution can be achieved, thereby making full use of the road surface adhesion coefficient of each shaft, and improving the vehicle's ability to cross terrain.

According to a first aspect of the present invention, a method for anti-slip control of torque between electric drive axle shafts of a multi-shaft vehicle is provided, wherein the multi-shaft vehicle comprises two drive shafts, wherein the two drive shafts are a first drive shaft and a second drive shaft; if the multi-shaft vehicle does not comprise a non-drive shaft, the drive shaft with the lower rotation speed of the two drive shafts is selected as a reference shaft; if the multi-shaft vehicle further comprises at least one non-drive shaft, the only non-drive shaft or a non-drive shaft with a lower rotation speed of the at least one non-drive shaft is selected as the reference shaft; and the method comprises the following steps:
step one: determining a total real-time demand torque and a torque distribution factor of the multi-shaft vehicle periodically by means of a drive controller of the multi-shaft vehicle when the multi-shaft vehicle starts moving and during entry thereof into a travelling state, and computing a real-time demand torque of each of the two drive shafts on this basis;
step two: determining a real-time vehicle speed of the multi-shaft vehicle by means of the drive controller;
step three: judging, by means of the drive controller, whether the multi-shaft vehicle is in a state of starting to move or a travelling state, according to whether a real-time rotation speed of the reference shaft monitored by a rotation speed sensor of the multi-shaft vehicle is greater than a predetermined rotation speed value; if the real-time rotation speed of the reference shaft is less than or equal to the predetermined rotation speed value, it is judged that the multi-shaft vehicle is in a state of starting to move; if the real-time rotation speed of the reference shaft is greater than the predetermined rotation speed value, it is judged that the multi-shaft vehicle is in a travelling state;
step four: if it is judged that the multi-shaft vehicle is in a state of starting to move, then a real-time rotation speed difference between the real-time rotation speed of each drive shaft and the real-time rotation speed of the reference shaft is compared with a prede-termined threshold by means of the drive controller, and a slipping state of the corresponding drive shaft is judged according to whether the real-time rotation speed difference between the real-time rotation speed of the corresponding drive shaft and the real-time rotation speed of the reference shaft is greater than the predetermined threshold; if the real-time rotation speed difference between the real-time rotation speed of the corresponding drive shaft and the real-time rotation speed of the reference shaft is less than or equal to the predetermined threshold, then it is judged that the corresponding drive shaft is not in a slipping state; if the real-time rotation speed difference between the real-time rotation speed of the corresponding drive shaft and the real-time rotation speed of the reference shaft is greater than the predetermined threshold, then it is judged that the corresponding drive shaft is in a slipping state;
step 5: if it is judged that the first drive shaft is in a slipping state, then a torque T₁ = (n₁ - (1 + s) × n₀) × kₚ₁ + (β₁ - (1 + s) × a/R₁) × J₁ × k_{d1} is subtracted from the real-time demand torque of the first drive shaft by means of the drive controller, and this subtracted torque T₁ is transferred to the non-slipping second drive shaft, wherein n₁ is the real-time rotation speed of the first drive shaft, s is a predetermined optimal slip rate, n₀ is the real-time rotation speed of the reference shaft, kₚ₁ is the torque gain of the real-time rotation speed difference of the first drive shaft, β₁ is the angular acceleration of the first drive shaft, a is the acceleration of the multi-shaft vehicle, R₁ is the rolling radius of the first drive shaft, J₁ is the equivalent moment of inertia of the first drive shaft, and k_{d1} is the gain of the angular acceleration of the first drive shaft;
step 6: if it is judged that the two drive shafts are both in a slipping state, then the torque T₁ is subtracted from the real-time demand torque of the first drive shaft and a torque T₂ = (n₂ - (1 + s) × n₀) × kₚ₂ + (β₂ - (1 + s) × a/R₂) × J₂ × k_{d2} is subtracted from the real-time demand torque of the second drive shaft by means of the drive controller, to keep slip rates of the two drive shafts within a predetermined optimal slip rate range, wherein n₂ is the real-time rotation speed of the second drive shaft, s is the predetermined optimal slip rate, n₀ is the real-time rotation speed of the reference shaft, kₚ₂ is the torque gain of the real-time rotation speed difference of the second drive shaft, β₂ is the angular acceleration of the second drive shaft, a is the acceleration of the multi-shaft vehicle, R₂ is the rolling radius of the second drive shaft, J₂ is the equivalent moment of inertia of the second drive shaft, and k_{d2} is the gain of the angular acceleration of the second drive shaft;
step 7: if it is judged that neither of the two drive shafts is in a slipping state, then the real-time demand torque of each drive shaft is individually sent to the corresponding drive shaft directly by means of the drive controller;
step 8: if it is judged that the multi-shaft vehicle is in a travelling state, then real-time slip rates of the two drive shafts are monitored by means of the drive controller, and a slipping state of each drive shaft is judged according to whether the real-time slip rate of the corresponding drive shaft is greater than the predetermined optimal slip rate s; if the real-time slip rate of the corresponding drive shaft is greater than the predetermined optimal slip rate s, then it is judged that the corresponding drive shaft is in a slipping state; if the real-time slip rate of the corresponding drive shaft is less than or equal to the predetermined optimal slip rate s, then it is judged that the corresponding drive shaft is not in a slipping state;
step 9: if it is judged that the first drive shaft is in a slipping state, then the torque T₁ is subtracted from the real-time demand torque of the first drive shaft by means of the drive controller, and this subtracted torque T₁ is transferred to the non-slipping second drive shaft;
step 10: if it is judged that the two drive shafts are both in a slipping state, then the torque T₁ is subtracted from the real-time demand torque of the first drive shaft and the torque T₂ is subtracted from the real-time demand torque of the second drive shaft by means of the drive controller, to keep the slip rates of the two drive shafts within the predetermined optimal slip rate range; and
step eleven: if it is judged that neither of the two drive shafts is in a slipping state, then the real-time demand torque of each drive shaft is individually sent to the corresponding drive shaft directly by means of the drive controller.

According to a second aspect of the present invention, a method for anti-slip control of torque between electric drive axle shafts of a multi-shaft vehicle is provided, wherein the multi-shaft vehicle comprises multiple drive shafts; if the multi-shaft vehicle does not comprise a non-drive shaft, the drive shaft with the lowest rotation speed of the multiple drive shafts is selected as a reference shaft; if the multi-shaft vehicle further comprises at least one non-drive shaft, the only non-drive shaft or a non-drive shaft with a lower rotation speed of the at least one non-drive shaft is selected as a reference shaft; and the method comprises the following steps:
step one: determining a total real-time demand torque and a torque distribution factor of the multi-shaft vehicle periodically by means of a drive controller of the multi-shaft vehicle when the multi-shaft vehicle starts moving and during entry thereof into a travelling state, and computing a real-time demand torque of each of the multiple drive shafts on this basis;
step two: determining a real-time vehicle speed of the multi-shaft vehicle by means of the drive controller;
step three: judging, by means of the drive controller, whether the multi-shaft vehicle is in a state of starting to move or a travelling state, according to whether a real-time rotation speed of the reference shaft monitored by a rotation speed sensor of the multi-shaft vehicle is greater than a predetermined rotation speed value; if the real-time rotation speed of the reference shaft is less than or equal to the predetermined rotation speed value, it is judged that the multi-shaft vehicle is in a state of starting to move; if the real-time rotation speed of the reference shaft is greater than the predetermined rotation speed value, it is judged that the multi-shaft vehicle is in a travelling state;
step four: if it is judged that the multi-shaft vehicle is in a state of starting to move, then a real-time rotation speed difference between the real-time rotation speed of each drive shaft and the real-time rotation speed of the reference shaft is compared with a predetermined threshold by means of the drive controller, and a slipping state of the corre-sponding drive shaft is judged according to whether the real-time rotation speed dif-ference between the real-time rotation speed of the corresponding drive shaft and the real-time rotation speed of the reference shaft is greater than the predetermined threshold; if the real-time rotation speed difference between the real-time rotation speed of the corresponding drive shaft and the real-time rotation speed of the refer-ence shaft is less than or equal to the predetermined threshold, then it is judged that the corresponding drive shaft is not in a slipping state; if the real-time rotation speed dif-ference between the real-time rotation speed of the corresponding drive shaft and the real-time rotation speed of the reference shaft is greater than the predetermined threshold, then it is judged that the corresponding drive shaft is in a slipping state;
step five: if it is judged that one or more drive shafts but not all of the multiple drive shafts is/are in a slipping state, then a torque Tₓ = (nₓ - (1 + s) × n₀) × kₚₓ + (βₓ - (1 + s) × a/Rₓ) × Jₓ × k_{dx} is subtracted from the real-time demand torque of each slipping drive shaft individually by means of the drive controller, and the sum of the subtracted torques Tₓ is transferred to another non-slipping drive shaft individually according to a certain ratio, according to the magnitude of a real-time slip rate of the other non-slipping drive shaft or according to an equal distribution ratio, to keep slip rates of the multiple drive shafts within a predetermined optimal slip rate range, wherein nₓ is the real-time rotation speed of the slipping (x)th drive shaft, s is a predetermined optimal slip rate, n₀ is the real-time rotation speed of the reference shaft, kₚₓ is the torque gain of the real-time rotation speed difference of the slipping (x)th drive shaft, βₓ is the angular acceleration of the slipping (x)th drive shaft, a is the acceleration of the multi-shaft vehicle, Rₓ is the rolling radius of the slipping (x)th drive shaft, Jₓ is the equivalent moment of inertia of the slipping (x)th drive shaft, and k_{dx} is the gain of the angular acceleration of the slipping (x)th drive shaft;
step six: if it is judged that the multiple drive shafts are all in a slipping state, then the torque Tₓ is subtracted from the real-time demand torque of each drive shaft individually by means of the drive controller, to keep the slip rates of the multiple drive shafts within the predetermined optimal slip rate range;
step seven: if it is judged that none of the multiple drive shafts is in a slipping state, then the real-time demand torque of each drive shaft is sent to the corresponding drive shaft directly by means of the drive controller;
step eight: if it is judged that the multi-shaft vehicle is in a travelling state, then real-time slip rates of the multiple drive shafts are monitored by means of the drive controller, and a slipping state of each drive shaft is judged according to whether the real-time slip rate of the corresponding drive shaft is greater than the predetermined optimal slip rate s; if the real-time slip rate of the corresponding drive shaft is greater than the predetermined optimal slip rate s, then it is judged that the corresponding drive shaft is in a slipping state; if the real-time slip rate of the corresponding drive shaft is less than or equal to the predetermined optimal slip rate s, then it is judged that the corresponding drive shaft is not in a slipping state;
step nine: if it is judged that one or more drive shafts but not all of the multiple drive shafts is/are in a slipping state, then the torque Tₓ is subtracted from the real-time demand torque of the slipping one or more drive shafts individually by means of the drive controller, and the sum of the subtracted torques Tₓ is transferred to another non-slipping drive shaft individually according to a certain ratio, according to the magnitude of a real-time slip rate of the other non-slipping drive shaft or according to an equal distribution ratio;
step ten: if it is judged that all of the multiple drive shafts are in a slipping state, then the torque Tₓ is subtracted from the real-time demand torque of each drive shaft individually by means of the drive controller, to keep the slip rates of the multiple drive shafts within the predetermined optimal slip rate range; and
step eleven: if it is judged that none of the drive shafts is in a slipping state, then the real-time demand torque of each drive shaft is individually sent to the corresponding drive shaft directly by means of the drive controller.

According to a third aspect of the present invention, a device for anti-slip control of torque between electric drive axle shafts of a multi-shaft vehicle is provided, wherein the multi-shaft vehicle comprises multiple drive shafts; if the multi-shaft vehicle does not comprise a non-drive shaft, the drive shaft with the lowest rotation speed of the multiple drive shafts is selected as a reference shaft; if the multi-shaft vehicle further comprises at least one non-drive shaft, the only non-drive shaft or a non-drive shaft with a lower rotation speed of the at least one non-drive shaft is selected as the reference shaft; and the device for anti-slip control of torque between electric drive axle shafts of a multi-shaft vehicle comprises:
a real-time demand torque computing module, configured to determine a total real-time demand torque and a torque distribution factor TSF of the multi-shaft vehicle periodically when the multi-shaft vehicle starts moving and during entry thereof into a travelling state, and compute a real-time demand torque of each of the multiple drive shafts on this basis;
a real-time vehicle speed determining module, configured to determine a real-time vehicle speed of the multi-shaft vehicle;
a vehicle state determining module, configured to judge whether the multi-shaft vehicle is in a state of starting to move or a travelling state, according to whether a real-time rotation speed of the reference shaft monitored by a rotation speed sensor is greater than a predetermined rotation speed value, wherein, if the real-time rotation speed of the reference shaft is less than or equal to the predetermined rotation speed value, it is judged that the multi-shaft vehicle is in a state of starting to move; and if the real-time rotation speed of the reference shaft is greater than the predetermined rotation speed value, it is judged that the multi-shaft vehicle is in a travelling state;
a first drive shaft state judgement module, configured to compare a real-time rotation speed difference between the real-time rotation speed of each drive shaft and the real-time rotation speed of the reference shaft with a predetermined threshold when the multi-shaft vehicle is in a state of starting to move, and judge a slipping state of the corresponding drive shaft according to whether the real-time rotation speed difference between the real-time rotation speed of the corresponding drive shaft and the real-time rotation speed of the reference shaft is greater than the predetermined threshold, wherein, if the real-time rotation speed difference between the real-time rotation speed of the corresponding drive shaft and the real-time rotation speed of the reference shaft is less than or equal to the predetermined threshold, then it is judged that the corresponding drive shaft is not in a slipping state; and if the real-time rotation speed difference between the real-time rotation speed of the corresponding drive shaft and the real-time rotation speed of the reference shaft is greater than the predetermined threshold, then it is judged that the corresponding drive shaft is in a slipping state;
a first torque distribution module, configured to subtract a torque Tₓ = (nₓ - (1 + s) × n₀) × kₚₓ + (βₓ - (1 + s) × a/Rₓ) × Jₓ × k_{dx} from the real-time demand torque of each slipping drive shaft individually when the multi-shaft vehicle is in a state of starting to move and one or more but not all of the multiple drive shafts is/are in a slipping state, and transfer the sum of the subtracted torques Tₓ to another non-slipping drive shaft individually according to a certain ratio, according to the magnitude of a real-time slip rate of the other non-slipping drive shaft or according to an equal distribution ratio, to keep slip rates of the multiple drive shafts within a predetermined optimal slip rate range, wherein
nₓ is the real-time rotation speed of the slipping (x)th drive shaft;
s is a predetermined optimal slip rate;
n₀ is the real-time rotation speed of the reference shaft;
kₚₓ is the torque gain of the real-time rotation speed difference of the slipping (x)th drive shaft;
βₓ is the angular acceleration of the slipping (x)th drive shaft;
a is the acceleration of the multi-shaft vehicle;
Rₓ is the rolling radius of the slipping (x)th drive shaft;
Jₓ is the equivalent moment of inertia of the slipping (x)th drive shaft; and
k_{dx} is the gain of the angular acceleration of the slipping (x)th drive shaft;
a second torque distribution module, configured to subtract Tₓ from the real-time demand torque of each drive shaft individually when the multi-shaft vehicle is in a state of starting to move and the multiple drive shafts are all in a slipping state, to keep the slip rates of the multiple drive shafts within a predetermined optimal slip rate range;
a third torque distribution module, configured to send the real-time demand torque of each drive shaft to the corresponding drive shaft directly when the multi-shaft vehicle is in a state of starting to move and none of the multiple drive shafts is in a slipping state;
a second drive shaft state judgement module, configured to monitor real-time slip rates of the multiple drive shafts when the multi-shaft vehicle is in a travelling state, and judge a slipping state of each drive shaft according to whether the real-time slip rate of the corresponding drive shaft is greater than a predetermined optimal slip rate s, wherein, if the real-time slip rate of the corresponding drive shaft is greater than the predetermined optimal slip rate s, then it is judged that the corresponding drive shaft is in a slipping state; and if the real-time slip rate of the corresponding drive shaft is less than or equal to the predetermined optimal slip rate s, then it is judged that the corresponding drive shaft is not in a slipping state;
a fourth torque distribution module, configured to subtract the torque Tₓ from the real-time demand torque of the slipping one or more drive shafts individually when the multi-shaft vehicle is in a travelling state and one or more drive shafts but not all of the multiple drive shafts is/are in a slipping state, and transfer the sum of the subtracted torques Tₓ to another non-slipping drive shaft individually according to a certain ratio, according to the magnitude of a real-time slip rate of the other non-slipping drive shaft or according to an equal distribution ratio;
a fifth torque distribution module, configured to subtract the torque Tₓ from the real-time demand torque of each drive shaft individually when the multi-shaft vehicle is in a travelling state and the multiple drive shafts are all in a slipping state, to keep the slip rates of the multiple drive shafts within the predetermined optimal slip rate range; and
a sixth torque distribution module, configured to send the real-time demand torque of each drive shaft individually to the corresponding drive shaft directly when the multi-shaft vehicle is in a travelling state and none of the drive shafts is in a slipping state.

According to a fourth aspect of the present invention, a device for anti-slip control of torque between electric drive axle shafts of a multi-shaft vehicle is provided, wherein the multi-shaft vehicle comprises multiple drive shafts; if the multi-shaft vehicle does not comprise a non-drive shaft, the drive shaft with the lowest rotation speed of the multiple drive shafts is selected as a reference shaft; if the multi-shaft vehicle further comprises at least one non-drive shaft, the only non-drive shaft or a non-drive shaft with a lower rotation speed of the at least one non-drive shaft is selected as the reference shaft; and the device for anti-slip control of torque between electric drive axle shafts of a multi-shaft vehicle comprises:
multiple rotation speed sensors, for individually monitoring real-time rotation speeds of each of the multiple drive shafts and the at least one non-drive shaft; and
a drive controller, connected to the multiple rotation speed sensors and comprising:
   a memory for storing an instruction; and
   a processor coupled to the memory, wherein the instruction, when executed by the pro-cessor, causes the processor to perform the above-described method for anti-slip control of torque between electric drive axle shafts of a multi-shaft vehicle.

According to a fifth aspect of the present invention, a computer-readable storage medium is provided, having stored thereon an instruction which, when executed by a pro-cessor, causes the processor to perform the above-described method for anti-slip control of torque between electric drive axle shafts of a multi-shaft vehicle.

According to a sixth aspect of the present invention, a computer program product is provided, comprising an instruction which, when executed by a processor, causes the processor to perform the above-described method for anti-slip control of torque between electric drive axle shafts of a multi-shaft vehicle.

In summary, the method of the present invention for control of torque between electric drive axle shafts of a multi-shaft vehicle achieves the following beneficial technical effects: under the operating conditions of starting to move and normal travel, real-time, rational distribution of torque between electric drive axle shafts of the multi-shaft vehicle is achieved; moreover, when all of the multiple drive shafts of the vehicle are slipping, torque redistribution can be achieved, thereby making full use of the road surface adhesion coefficient of each shaft, and improving the vehicle's ability to cross terrain.

### Brief description of the drawings

The present invention is explained in further detail below with reference to the drawings and particular embodiments.
Fig. 1 is a flow chart of a method for control of torque between electric drive axle shafts of a multi-shaft vehicle according to a first embodiment of the present invention.
Fig. 2 is a flow chart of a method for control of torque between electric drive axle shafts of a multi-shaft vehicle according to a second embodiment of the present invention.
Fig. 3 is a structural block diagram of a device for control of torque between electric drive axle shafts of a multi-shaft vehicle according to a third embodiment of the present invention.
Fig. 4 is a structural block diagram of a device for control of torque between electric drive axle shafts of a multi-shaft vehicle according to a fourth embodiment of the present invention.

### Detailed description of the invention

With regard to "first", "second", etc. used herein, these do not specifically indicate order or rank, being merely intended to distinguish between components or operations described with the same technical terms.

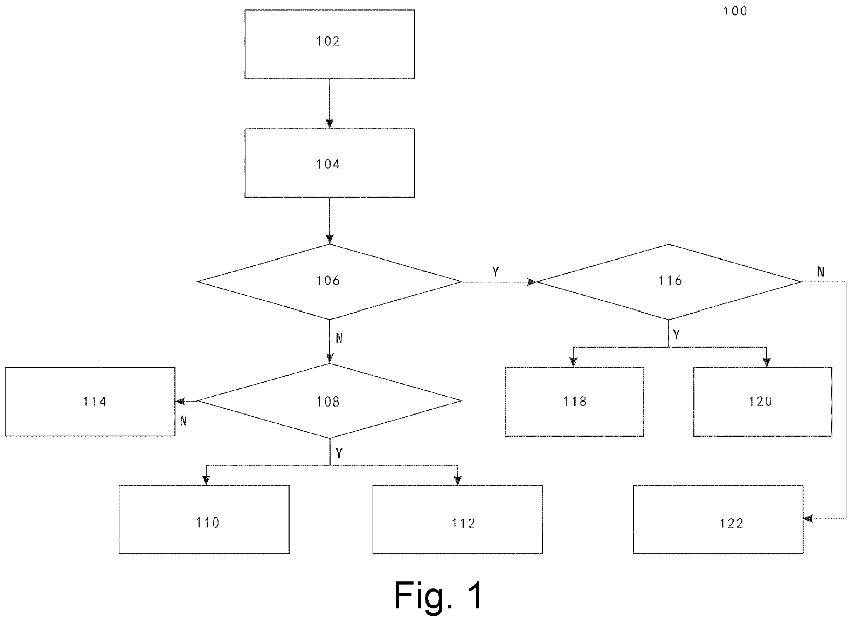

Fig. 1 is a flow chart of a method 100 for anti-slip control of torque between electric drive axle shafts of a multi-shaft vehicle according to a first embodiment of the present invention. The method 100 for control of torque between electric drive axle shafts of a multi-shaft vehicle according to the first embodiment of the present invention is used for real-time, rational distribution of torque between electric drive axle shafts of a multi-shaft vehicle, wherein the multi-shaft vehicle comprises two drive shafts and a non-drive shaft, wherein the two drive shafts are a first drive shaft and a second drive shaft, and the non-drive shaft is selected as a reference shaft. If the multi-shaft vehicle does not comprise a non-drive shaft, the drive shaft with the lower rotation speed of the two drive shafts is selected as a reference shaft. If the multi-shaft vehicle comprises multiple non-drive shafts, a non-drive shaft with a lower rotation speed of the multiple non-drive shafts is selected as a reference shaft. The method 100 comprises the following steps:
Step 102: A total real-time demand torque and a torque distribution factor TSF of the multi-shaft vehicle are determined periodically (10 ms in this embodiment) by means of a drive controller of the multi-shaft vehicle when the multi-shaft vehicle starts moving and during entry thereof into a travelling state, and a real-time demand torque of each of the two drive shafts is computed on this basis. The total real-time demand torque of the multi-shaft vehicle is related to the position of the throttle (accelerator pedal) of the multi-shaft vehicle, its driving mode and vehicle speed.
Step 104: A real-time rotation speed of each drive shaft of the multi-shaft vehicle is monitored by means of a rotation speed sensor of the multi-shaft vehicle, and a real-time vehicle speed of the multi-shaft vehicle is determined by computation on the basis of the real-time rotation speed by means of the drive controller. In this embodiment, in the absence of wheel slip, the real-time vehicle speed of the multi-shaft vehicle = the average value of the product of the real-time rotation speed of each drive shaft of the multi-shaft vehicle and the rolling radius of each wheel tyre corresponding to each drive shaft. If wheel slip is present, the real-time vehicle speed of the multi-shaft vehicle = vehicle speed before wheel slip + the integral of acceleration of the multi-shaft vehicle after wheel slip. Of course, those skilled in the art may use other methods to determine the real-time vehicle speed of the multi-shaft vehicle, according to the requirements of particular application scenarios.
Step 106: A judgement is made, by means of the drive controller, as to whether the multi-shaft vehicle is in a state of starting to move or a travelling state, according to whether a real-time rotation speed of the reference shaft monitored by a rotation speed sensor is greater than a predetermined rotation speed value. If the real-time rotation speed of the reference shaft is less than or equal to the predetermined rotation speed value, it is judged that the multi-shaft vehicle is in a state of starting to move. If the real-time rotation speed of the reference shaft is greater than the predetermined rotation speed value, it is judged that the multi-shaft vehicle is in a travelling state. In this embodiment, the predetermined rotation speed value is 2 rpm. Of course, those skilled in the art may use other predetermined rotation speed values calibrated through testing, according to the requirements of particular application scenarios.
Step 108: If it is judged that the multi-shaft vehicle is in a state of starting to move, then a real-time rotation speed difference between the real-time rotation speed of each drive shaft and the real-time rotation speed of the reference shaft is compared with a predetermined threshold by means of the drive controller, and a slipping state of the corresponding drive shaft is judged according to whether the real-time rotation speed difference between the real-time rotation speed of the corresponding drive shaft and the real-time rotation speed of the reference shaft is greater than the predetermined threshold. If the real-time rotation speed difference between the real-time rotation speed of the corresponding drive shaft and the real-time rotation speed of the reference shaft is less than or equal to the predetermined threshold, then it is judged that the corresponding drive shaft is not in a slipping state. If the real-time rotation speed difference between the real-time rotation speed of the corresponding drive shaft and the real-time rotation speed of the reference shaft is greater than the predetermined threshold, then it is judged that the corresponding drive shaft is in a slipping state. In this embodiment, the predetermined threshold is 20%. Of course, those skilled in the art may use other thresholds calibrated through testing, according to the requirements of particular application scenarios.
Step 110: If it is judged that the first drive shaft is in a slipping state, then T₁ = (n₁ - (1 + s) × n₀) × kₚ₁ + (β₁- (1 + s) × a/R₁) × J₁ × k_{d1} is subtracted from the real-time demand torque of the first drive shaft by means of the drive controller, and this subtracted torque T₁ is transferred to the non-slipping second drive shaft, i.e. torque transfer is performed, wherein
   n₁ is the real-time rotation speed of the first drive shaft;
   s is a predetermined optimal slip rate; in this embodiment, the predetermined optimal slip rate s is 20%, but of course, those skilled in the art may use other values which are set as needed, according to the requirements of particular application scenarios;
   n₀ is the real-time rotation speed of the reference shaft;
   kₚ₁ is the torque gain of the real-time rotation speed difference of the first drive shaft. In this embodiment, the initial value of kₚ₁ is 1, and those skilled in the art may make calibration adjustments based on whole-vehicle testing;
   β₁ is the angular acceleration of the first drive shaft;
   a is the acceleration of the multi-shaft vehicle;
   R₁ is the rolling radius of the first drive shaft;
   J₁ is the equivalent moment of inertia of the first drive shaft; and k_{d1} is the gain of the angular acceleration of the first drive shaft. In this embodiment, the initial value of k_{d1} is 1, and those skilled in the art may make calibration adjustments based on whole-vehicle testing.
Step 112: If it is judged that the two drive shafts are both in a slipping state, then T₁ is subtracted from the real-time demand torque of the first drive shaft and T₂ = (n₂ - (1 + s) × n₀) × kₚ₂ + (β₂- (1 + s) × a/R₂) × J₂ × k_{d2} is subtracted from the real-time demand torque of the second drive shaft by means of the drive controller, i.e. torque reduction is performed, to keep slip rates of the two drive shafts within a predetermined optimal slip rate range. In this embodiment, the predetermined optimal slip rate range is 8 - 25%, preferably 10 - 20%, more preferably 8 - 15%, wherein
   n₂ is the real-time rotation speed of the second drive shaft;
   s is a predetermined optimal slip rate. In this embodiment, the predetermined optimal slip rate s is 20%, but of course, those skilled in the art may use other thresholds which are set as needed, according to the requirements of particular application scenarios;
   n₀ is the real-time rotation speed of the reference shaft;
   kₚ₂ is the torque gain of the real-time rotation speed difference of the second drive shaft. In this embodiment, the initial value of kₚ₂ is 1, and those skilled in the art may make calibration adjustments based on whole-vehicle testing;
   β₂ is the angular acceleration of the second drive shaft;
   a is the acceleration of the multi-shaft vehicle;
   R₂ is the rolling radius of the second drive shaft;
   J₂ is the equivalent moment of inertia of the second drive shaft; and
   k_{d2} is the gain of the angular acceleration of the second drive shaft. In this embodiment, the initial value of k_{d2} is 1, and those skilled in the art may make calibration adjustments based on whole-vehicle testing.
Step 114: If it is judged that neither of the two drive shafts is in a slipping state, then the real-time demand torque of each drive shaft is sent to the corresponding drive shaft directly by means of the drive controller.
Step 116: If it is judged that the multi-shaft vehicle is in a travelling state, then real-time slip rates of the two drive shafts are monitored by means of the drive controller, and a slipping state of each drive shaft is judged according to whether the real-time slip rate of the corresponding drive shaft is greater than the predetermined optimal slip rate s. If the real-time slip rate of the corresponding drive shaft is greater than the predetermined optimal slip rate s, then it is judged that the corresponding drive shaft is in a slipping state; if the real-time slip rate of the corresponding drive shaft is less than or equal to the predetermined optimal slip rate s, then it is judged that the corresponding drive shaft is not in a slipping state. In this embodiment, the real-time slip rate Slipₓ of the (x)th drive shaft among the drive shafts = (Vm - V)/V x 100%, wherein V is the real-time vehicle speed of the multi-shaft vehicle, and Vm is the product of the real-time rotation speed of the (x)th drive shaft among the drive shafts of the multi-shaft vehicle and the rolling radius of the wheel tyre corresponding to the (x)th drive shaft; or the real-time slip rate Slipₓ of each drive shaft = (real-time rotation speed of the (x)th drive shaft × rolling radius of the wheel tyre corresponding to the (x)th drive shaft / real-time rotation speed of the reference shaft × rolling radius of the wheel tyre corresponding to the reference shaft) - 1.
Step 118: If it is judged that the first drive shaft is in a slipping state, then T₁ is subtracted from the real-time demand torque of the first drive shaft by means of the drive controller, and this subtracted torque T₁ is transferred to the non-slipping second drive shaft, i.e. torque transfer is performed.
Step 120: If it is judged that the two drive shafts are both in a slipping state, then T₁ is subtracted from the real-time demand torque of the first drive shaft and T₂ is subtracted from the real-time demand torque of the second drive shaft by means of the drive controller, i.e. torque reduction is performed, to keep the slip rates of the two drive shafts within a predetermined optimal slip rate range. In this embodiment, the predetermined optimal slip rate range is 8 - 25%, preferably 10 - 20%, more preferably 8 - 15%.
Step 122: If it is judged that neither of the two drive shafts is in a slipping state, then the real-time demand torque of each drive shaft is sent to the corresponding drive shaft directly by means of the drive controller.

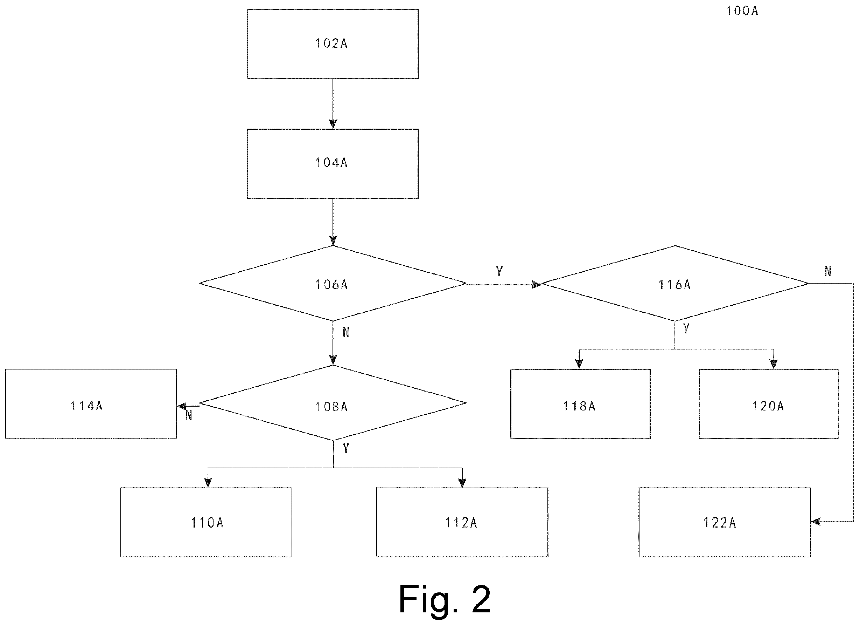

Fig. 2 is a flow chart of a method 100A for anti-slip control of torque between electric drive axle shafts of a multi-shaft vehicle according to a second embodiment of the present invention. The method 100A for anti-slip control of torque between electric drive axle shafts of a multi-shaft vehicle according to the second embodiment of the present invention is used for real-time, rational distribution of torque between electric drive axle shafts of a multi-shaft vehicle, wherein the multi-shaft vehicle comprises multiple (three or more) drive shafts. If the multi-shaft vehicle does not comprise a non-drive shaft, the drive shaft with the lowest rotation speed of the multiple drive shafts is selected as a reference shaft. If the multi-shaft vehicle comprises at least one non-drive shaft, the only non-drive shaft or a non-drive shaft with a lower rotation speed of the at least one non-drive shaft is selected as a reference shaft. The method 100A comprises the following steps:
Step 102A: A total real-time demand torque and a torque distribution factor TSF of the multi-shaft vehicle are determined periodically (10 ms in this embodiment) by means of a drive controller of the multi-shaft vehicle when the multi-shaft vehicle starts moving and during entry thereof into a travelling state, and a real-time demand torque of each of the multiple drive shafts is computed on this basis. The total real-time demand torque of the multi-shaft vehicle is related to the position of the throttle (accelerator pedal) of the multi-shaft vehicle, its driving mode and vehicle speed.
Step 104A: A real-time rotation speed of each drive shaft of the multi-shaft vehicle is monitored by means of a rotation speed sensor of the multi-shaft vehicle, and a real-time vehicle speed of the multi-shaft vehicle is determined by computation on the basis of the real-time rotation speed by means of the drive controller. In this embodiment, in the absence of wheel slip, the real-time vehicle speed of the multi-shaft vehicle = the average value of the product of the real-time rotation speed of each drive shaft of the multi-shaft vehicle and the rolling radius of each wheel tyre corresponding to each drive shaft. If wheel slip is present, the real-time vehicle speed of the multi-shaft vehicle = vehicle speed before wheel slip + the integral of acceleration of the multi-shaft vehicle after wheel slip. Of course, those skilled in the art may use other methods to determine the real-time vehicle speed of the multi-shaft vehicle, according to the requirements of particular application scenarios.
Step 106A: A judgement is made, by means of the drive controller, as to whether the multi-shaft vehicle is in a state of starting to move or a travelling state, according to whether a real-time rotation speed of the reference shaft monitored by a rotation speed sensor is greater than a predetermined rotation speed value. If the real-time rotation speed of the reference shaft is less than or equal to the predetermined rotation speed value, it is judged that the multi-shaft vehicle is in a state of starting to move. If the real-time rotation speed of the reference shaft is greater than the predetermined rotation speed value, it is judged that the multi-shaft vehicle is in a travelling state. In this em-bodiment, the predetermined rotation speed value is 2 rpm. Of course, those skilled in the art may use other predetermined rotation speed values calibrated through testing, according to the requirements of particular application scenarios.
Step 108A: If it is judged that the multi-shaft vehicle is in a state of starting to move, then a real-time rotation speed difference between the real-time rotation speed of each drive shaft and the real-time rotation speed of the reference shaft is compared with a predetermined threshold by means of the drive controller, and a slipping state of the corre-sponding drive shaft is judged according to whether the real-time rotation speed dif-ference between the real-time rotation speed of the corresponding drive shaft and the real-time rotation speed of the reference shaft is greater than the predetermined threshold. If the real-time rotation speed difference between the real-time rotation speed of the corresponding drive shaft and the real-time rotation speed of the refer-ence shaft is less than or equal to the predetermined threshold, then it is judged that the corresponding drive shaft is not in a slipping state. If the real-time rotation speed dif-ference between the real-time rotation speed of the corresponding drive shaft and the real-time rotation speed of the reference shaft is greater than the predetermined threshold, then it is judged that the corresponding drive shaft is in a slipping state. In this embodiment, the predetermined threshold is 20%. Of course, those skilled in the art may use other thresholds calibrated through testing, according to the requirements of particular application scenarios.
Step 110A: If it is judged that one or more drive shafts but not all of the multiple drive shafts is/are in a slipping state, then Tₓ = (nₓ - (1 + s) × n₀) × kₚₓ + (βₓ- (1 + s) × a/Rₓ) × Jₓ × k_{dx} is subtracted from the real-time demand torque of the slipping one or more drive shafts individually by means of the drive controller, and the sum of the subtracted torques Tₓ is transferred to another non-slipping drive shaft individually according to a certain ratio, according to the magnitude of a real-time slip rate of the other non-slipping drive shaft or according to an equal distribution ratio, i.e. torque transfer is performed, to keep slip rates of the multiple drive shafts within a predetermined optimal slip rate range, wherein
   nₓ is the real-time rotation speed of the slipping (x)th drive shaft;
   s is a predetermined optimal slip rate. In this embodiment, the predetermined optimal slip rate s is 20%, but of course, those skilled in the art may use other thresholds which are set as needed, according to the requirements of particular application scenarios;
   n₀ is the real-time rotation speed of the reference shaft;
   kₚₓ is the torque gain of the real-time rotation speed difference of the slipping (x)th drive shaft. In this embodiment, the initial value of kₚₓ is 1, and those skilled in the art may make calibration adjustments based on whole-vehicle testing;
   βₓ is the angular acceleration of the slipping (x)th drive shaft;
   a is the acceleration of the multi-shaft vehicle;
   Rₓ is the rolling radius of the slipping (x)th drive shaft;
   Jₓ is the equivalent moment of inertia of the slipping (x)th drive shaft; and
   k_{dx} is the gain of the angular acceleration of the slipping (x)th drive shaft. In this embodiment, the initial value of k_{dx} is 1, and those skilled in the art may make calibration adjustments based on whole-vehicle testing.
Step 112A: If it is judged that the multiple drive shafts are all in a slipping state, then torque Tₓ is subtracted from the real-time demand torque of each drive shaft individually by means of the drive controller, i.e. torque reduction is performed, to keep the slip rates of the multiple drive shafts within a predetermined optimal slip rate range. In this embodiment, the predetermined optimal slip rate range is 8 - 25%, preferably 10 - 20%, more preferably 8 - 15%.
Step 114A: If it is judged that none of the multiple drive shafts is in a slipping state, then the real-time demand torque of each drive shaft is individually sent to the corresponding drive shaft directly by means of the drive controller.
Step 116A: If it is judged that the multi-shaft vehicle is in a travelling state, then real-time slip rates of the multiple drive shafts are monitored by means of the drive controller of the multi-shaft vehicle, and a slipping state of each drive shaft is judged according to whether the real-time slip rate of the corresponding drive shaft is greater than the predetermined optimal slip rate s. If the real-time slip rate of the corresponding drive shaft is greater than the predetermined optimal slip rate s, then it is judged that the corresponding drive shaft is in a slipping state; if the real-time slip rate of the corresponding drive shaft is less than or equal to the predetermined optimal slip rate s, then it is judged that the corresponding drive shaft is not in a slipping state. In this embodiment, the real-time slip rate Slipₓ of the (x)th drive shaft among the drive shafts = (Vm - V)/V × 100%, wherein V is the real-time vehicle speed of the multi-shaft vehicle, and Vm is the product of the real-time rotation speed of the (x)th drive shaft among the drive shafts of the multi-shaft vehicle and the rolling radius of the wheel tyre corresponding to the (x)th drive shaft; or the real-time slip rate Slipₓ of the (x)th drive shaft among the drive shafts = (real-time rotation speed of the (x)th drive shaft × rolling radius of the wheel tyre corresponding to the (x)th drive shaft / real-time rotation speed of the reference shaft × rolling radius of the wheel tyre corresponding to the reference shaft) - 1.
Step 118A: If it is judged that one or more drive shafts but not all of the multiple drive shafts is/are in a slipping state, then torque Tₓ is subtracted from the real-time demand torque of the slipping one or more drive shafts individually by means of the drive controller, and the sum of the subtracted torques Tₓ is transferred to another non-slipping drive shaft individually according to a certain ratio, according to the magnitude of a real-time slip rate of the other non-slipping drive shaft or according to an equal distribution ratio. In this embodiment, the sum of the subtracted torques Tₓ is preferentially allocated to another non-slipping drive shaft with a low slip rate.
Step 120A: If it is judged that the multiple drive shafts are all in a slipping state, then torque Tₓ is subtracted from the real-time demand torque of each drive shaft individually by means of the drive controller, i.e. torque reduction is performed, to keep the slip rates of the multiple drive shafts within the predetermined optimal slip rate range. In this embodiment, the predetermined optimal slip rate range is 8 - 25%, preferably 10 - 20%, more preferably 8 - 15%.
Step 122A: If it is judged that none of the multiple drive shafts is in a slipping state, then the real-time demand torque of each drive shaft is individually sent to the corresponding drive shaft directly by means of the drive controller.

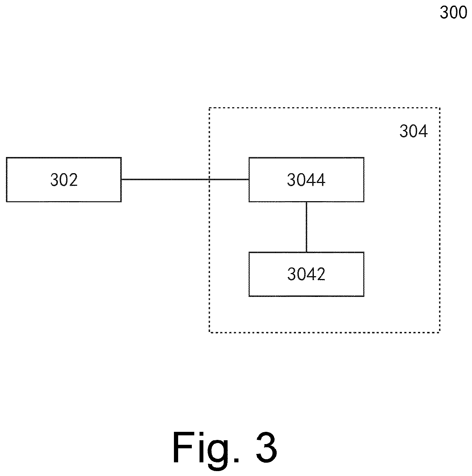

Fig. 3 is a structural block diagram of a device 300 for control of torque between electric drive axle shafts of a multi-shaft vehicle according to a third embodiment of the present invention. The device 300 for control of torque between electric drive axle shafts of a multi-shaft vehicle according to the third embodiment of the present invention is used for real-time, rational distribution of torque between electric drive axle shafts of a multi-shaft vehicle, wherein the multi-shaft vehicle comprises multiple (two or more) drive shafts. If the multi-shaft vehicle does not comprise a non-drive shaft, the drive shaft with the lowest rotation speed of the multiple drive shafts is selected as a reference shaft. If the multi-shaft vehicle further comprises at least one non-drive shaft, the only non-drive shaft or a non-drive shaft with a lower rotation speed of the at least one non-drive shaft is selected as a reference shaft. The device 300 for anti-slip control of torque between electric drive axle shafts of a multi-shaft vehicle comprises multiple rotation speed sensors 302, for individually monitoring real-time rotation speeds of the multiple drive shafts and the at least one non-drive shaft; and a drive controller 304, the drive controller 304 comprising a memory 3042 for storing an instruction or instructions, and a processor 3044 coupled to the memory 3042, wherein the instruction or instructions, when executed by the processor 3044, cause the processor 3044 to perform the method according to the first embodiment or second embodiment of the present invention.

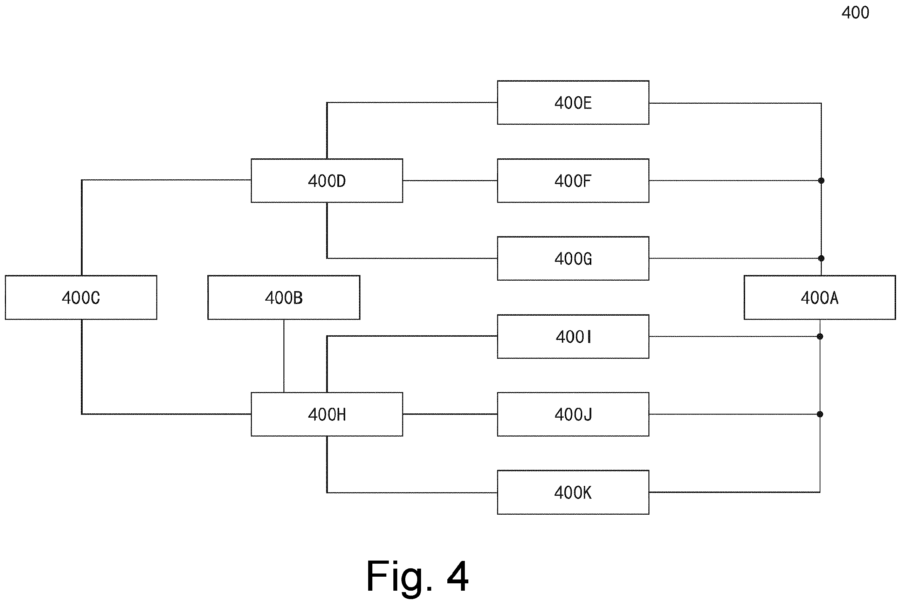

Fig. 4 is a structural block diagram of a device 400 for anti-slip control of torque between electric drive axle shafts of a multi-shaft vehicle according to a fourth embodiment of the present invention. The device 400 for anti-slip control of torque between electric drive axle shafts of a multi-shaft vehicle according to the fourth embodiment of the present invention is used for real-time, rational distribution of torque between electric drive axle shafts of a multi-shaft vehicle, wherein the multi-shaft vehicle comprises multiple (two or more) drive shafts. If the multi-shaft vehicle does not comprise a non-drive shaft, the drive shaft with the lowest rotation speed of the multiple drive shafts is selected as a reference shaft. If the multi-shaft vehicle further comprises at least one non-drive shaft, the only non-drive shaft or a non-drive shaft with a lower rotation speed of the at least one non-drive shaft is selected as a reference shaft. The device 400 for anti-slip control of torque between electric drive axle shafts of a multi-shaft vehicle comprises a real-time demand torque computing module 400A, a real-time vehicle speed determining module 400B, a vehicle state determining module 400C, a first drive shaft state judgement module 400D, a first torque distribution module 400E, a second torque distribution module 400F, a third torque distribution module 400G, a second drive shaft state judgement module 400H, a fourth torque distribution module 400I, a fifth torque distribution module 400J and a sixth torque distribution module 400K. Each of the modules 400A - 400K may be realized using program software or hardware according the requirements of particular application scenarios.

The real-time demand torque computing module 400A is configured to determine a total real-time demand torque and a torque distribution factor TSF of the multi-shaft vehicle periodically (10 ms in this embodiment) when the multi-shaft vehicle starts moving and during entry thereof into a travelling state, and compute a real-time demand torque of each of the multiple drive shafts on this basis. The total real-time demand torque of the multi-shaft vehicle is related to the position of the throttle (accelerator pedal) of the multi-shaft vehicle, its driving mode and vehicle speed.

The real-time vehicle speed determining module 400B is configured to determine a real-time vehicle speed of the multi-shaft vehicle. In this embodiment, a real-time rotation speed of each drive shaft of the multi-shaft vehicle is monitored by means of a rotation speed sensor, and a real-time vehicle speed of the multi-shaft vehicle is determined by computation on the basis of the real-time rotation speed by the real-time vehicle speed determining module 400B. In this embodiment, in the absence of wheel slip, the real-time vehicle speed of the multi-shaft vehicle = the average value of the product of the real-time rotation speed of each drive shaft of the multi-shaft vehicle and the rolling radius of each wheel tyre corresponding to each drive shaft. If wheel slip is present, the real-time vehicle speed of the multi-shaft vehicle = vehicle speed before wheel slip + the integral of acceleration of the multi-shaft vehicle after wheel slip. Of course, those skilled in the art may use other methods to determine the real-time vehicle speed of the multi-shaft vehicle, according to the requirements of particular application scenarios.

The vehicle state determining module 400C is configured to judge whether the multi-shaft vehicle is in a state of starting to move or a travelling state, according to whether a real-time rotation speed of the reference shaft monitored by a rotation speed sensor is greater than a predetermined rotation speed value. If the real-time rotation speed of the reference shaft is less than or equal to the predetermined rotation speed value, it is judged that the multi-shaft vehicle is in a state of starting to move. If the real-time rotation speed of the reference shaft is greater than the predetermined rotation speed value, it is judged that the multi-shaft vehicle is in a travelling state. In this embodiment, the predetermined rotation speed value is 2 rpm. Of course, those skilled in the art may use other predetermined rotation speed values calibrated through testing, according to the requirements of particular application scenarios.

The first drive shaft state judgement module 400D is configured to compare a real-time rotation speed difference between the real-time rotation speed of each drive shaft and the real-time rotation speed of the reference shaft with a predetermined threshold when the multi-shaft vehicle is in a state of starting to move, and judge a slipping state of the corresponding drive shaft according to whether the real-time rotation speed dif-ference between the real-time rotation speed of the corresponding drive shaft and the real-time rotation speed of the reference shaft is greater than the predetermined threshold; if the real-time rotation speed difference between the real-time rotation speed of the corresponding drive shaft and the real-time rotation speed of the refer-ence shaft is less than or equal to the predetermined threshold, then it is judged that the corresponding drive shaft is not in a slipping state; if the real-time rotation speed dif-ference between the real-time rotation speed of the corresponding drive shaft and the real-time rotation speed of the reference shaft is greater than the predetermined threshold, then it is judged that the corresponding drive shaft is in a slipping state. In this embodiment, the predetermined threshold is 20%. Of course, those skilled in the art may use other thresholds calibrated through testing, according to the requirements of particular application scenarios.

The first torque distribution module 400E is configured to subtract torque Tₓ from the real-time demand torque of each slipping drive shaft individually when the multi-shaft vehicle is in a state of starting to move and one or more but not all of the multiple drive shafts is/are in a slipping state, and transfer the sum of the subtracted torques Tₓ to another non-slipping drive shaft individually according to a certain ratio, according to the magnitude of a real-time slip rate of the other non-slipping drive shaft or according to an equal distribution ratio, to keep slip rates of the multiple drive shafts within a predetermined optimal slip rate range. In this embodiment, Tₓ = (nₓ - (1 + s) × n₀) × kₚₓ + (βₓ - (1 + s) × a/Rₓ) × Jₓ × k_{dx}, wherein
nₓ is the real-time rotation speed of the slipping (x)th drive shaft;
s is a predetermined optimal slip rate. In this embodiment, the predetermined optimal slip rate s is 20%, but of course, those skilled in the art may use other thresholds which are set as needed, according to the requirements of particular application scenarios;
n₀ is the real-time rotation speed of the reference shaft;
kₚₓ is the torque gain of the real-time rotation speed difference of the slipping (x)th drive shaft. In this embodiment, the initial value of kₚₓ is 1, and those skilled in the art may make calibration adjustments based on whole-vehicle testing;
βₓ is the angular acceleration of the slipping (x)th drive shaft;
a is the acceleration of the multi-shaft vehicle;
Rₓ is the rolling radius of the slipping (x)th drive shaft;
Jₓ is the equivalent moment of inertia of the slipping (x)th drive shaft; and
k_{dx} is the gain of the angular acceleration of the slipping (x)th drive shaft. In this embodiment, the initial value of k_{dx} is 1, and those skilled in the art may make calibration adjustments based on whole-vehicle testing.

The second torque distribution module 400F is configured to subtract Tₓ from the real-time demand torque of each drive shaft individually when the multi-shaft vehicle is in a state of starting to move and the multiple drive shafts are all in a slipping state, to keep the slip rates of the multiple drive shafts within a predetermined optimal slip rate range. In this embodiment, the predetermined optimal slip rate range is 8 - 25%, preferably 10 - 20%, more preferably 8 - 15%.

The third torque distribution module 400G is configured to send the real-time demand torque of each drive shaft to the corresponding drive shaft directly when the multi-shaft vehicle is in a state of starting to move and none of the multiple drive shafts is in a slipping state.

The second drive shaft state judgement module 400H is configured to monitor real-time slip rates of the multiple drive shafts when the multi-shaft vehicle is in a travelling state, and judge a slipping state of each drive shaft according to whether the real-time slip rate of the corresponding drive shaft is greater than a predetermined optimal slip rate s. If the real-time slip rate of the corresponding drive shaft is greater than the predetermined optimal slip rate s, then it is judged that the corresponding drive shaft is in a slipping state. If the real-time slip rate of the corresponding drive shaft is less than or equal to the predetermined optimal slip rate s, then it is judged that the corresponding drive shaft is not in a slipping state. In this embodiment, the real-time slip rate Slipₓ of the (x)th drive shaft among the drive shafts = (Vm - V)/V × 100%, wherein V is the real-time vehicle speed of the multi-shaft vehicle, and Vm is the product of the real-time rotation speed of the (x)th drive shaft among the drive shafts of the multi-shaft vehicle and the rolling radius of the wheel tyre corresponding to the (x)th drive shaft; or the real-time slip rate Slipₓ of the (x)th drive shaft among the drive shafts = (real-time rotation speed of the (x)th drive shaft × rolling radius of the wheel tyre corresponding to the (x)th drive shaft / real-time rotation speed of the reference shaft × rolling radius of the wheel tyre corresponding to the reference shaft) - 1.

The fourth torque distribution module 400I is configured to subtract the torque Tₓ from the real-time demand torque of the slipping one or more drive shafts individually when the multi-shaft vehicle is in a travelling state and one or more drive shafts but not all of the multiple drive shafts is/are in a slipping state, and transfer the sum of the subtracted torques Tₓ to another non-slipping drive shaft individually according to a certain ratio, according to the magnitude of a real-time slip rate of the other non-slipping drive shaft or according to an equal distribution ratio. In this embodiment, the sum of the subtracted torques Tₓ is preferentially allocated to another non-slipping drive shaft with a low slip rate.

The fifth torque distribution module 400J is configured to subtract torque Tₓ from the real-time demand torque of each drive shaft individually when the multi-shaft vehicle is in a travelling state and the multiple drive shafts are all in a slipping state, to keep the slip rates of the multiple drive shafts within the predetermined optimal slip rate range. In this embodiment, the predetermined optimal slip rate range is 8 - 25%, preferably 10 - 20%, more preferably 8 - 15%.

The sixth torque distribution module 400K is configured to send the real-time demand torque of each drive shaft individually to the corresponding drive shaft directly when the multi-shaft vehicle is in a travelling state and none of the drive shafts is in a slipping state.

A fifth embodiment of the present invention provides a computer-readable storage medium (not shown), having stored thereon an instruction or instructions which, when executed by a processor, cause the processor to perform the method according to the first embodiment or second embodiment of the present invention.

A sixth embodiment of the present invention provides a computer program product (not shown), comprising an instruction or instructions which, when executed by a processor, cause the processor to perform the method according to the first embodiment or second embodiment of the present invention.

The above are merely preferred embodiments of the present invention, which cannot be used to limit the scope of implementation of the present invention; that is, all simple equivalent changes and modifications made according to the claims and description of the present application are still included in the scope of protection of the present invention. In addition, it is not necessary for any embodiment or claim of the present invention to realize all of the objectives or advantages or characteristics disclosed in the present invention. Furthermore, the abstract section and the title are merely intended to assist with patent document searches, not to limit the scope of protection of the present invention.

## Claims

1. Method for anti-slip control of torque between electric drive axle shafts of a multi-shaft vehicle, wherein the multi-shaft vehicle comprises two drive shafts, wherein the two drive shafts are a first drive shaft and a second drive shaft; if the multi-shaft vehicle does not comprise a non-drive shaft, the drive shaft with the lower rotation speed of the two drive shafts is selected as a reference shaft; if the multi-shaft vehicle further comprises at least one non-drive shaft, the only non-drive shaft or a non-drive shaft with a lower rotation speed of the at least one non-drive shaft is selected as the reference shaft; and the method comprises the following steps:
step one: determining a total real-time demand torque and a torque distribution factor of the multi-shaft vehicle periodically by means of a drive controller of the multi-shaft vehicle when the multi-shaft vehicle starts moving and during entry thereof into a travelling state, and computing a real-time demand torque of each of the two drive shafts on this basis;
step two: determining a real-time vehicle speed of the multi-shaft vehicle by means of the drive controller;
step three: judging, by means of the drive controller, whether the multi-shaft vehicle is in a state of starting to move or a travelling state, according to whether a real-time rotation speed of the reference shaft monitored by a rotation speed sensor of the multi-shaft vehicle is greater than a predetermined rotation speed value; if the real-time rotation speed of the reference shaft is less than or equal to the predetermined rotation speed value, it is judged that the multi-shaft vehicle is in a state of starting to move; if the real-time rotation speed of the reference shaft is greater than the predetermined rotation speed value, it is judged that the multi-shaft vehicle is in a travelling state;
step four: if it is judged that the multi-shaft vehicle is in a state of starting to move, then a real-time rotation speed difference between the real-time rotation speed of each drive shaft and the real-time rotation speed of the reference shaft is compared with a predetermined threshold by means of the drive controller, and a slipping state of the corresponding drive shaft is judged according to whether the real-time rotation speed difference between the real-time rotation speed of the corresponding drive shaft and the real-time rotation speed of the reference shaft is greater than the predetermined threshold; if the real-time rotation speed difference between the real-time rotation speed of the corresponding drive shaft and the real-time rotation speed of the reference shaft is less than or equal to the predetermined threshold, then it is judged that the corresponding drive shaft is not in a slipping state; if the real-time rotation speed difference between the real-time rotation speed of the corresponding drive shaft and the real-time rotation speed of the reference shaft is greater than the predetermined threshold, then it is judged that the corresponding drive shaft is in a slipping state;
step 5: if it is judged that the first drive shaft is in a slipping state, then a torque T₁ = (n₁ - (1 + s) × n₀) × kₚ₁ + (β₁ - (1 + s) × a/R₁) × J₁ × k_{d1} is subtracted from the real-time demand torque of the first drive shaft by means of the drive controller, and this subtracted torque T₁ is transferred to the non-slipping second drive shaft, wherein n₁ is the real-time rotation speed of the first drive shaft, s is a predetermined optimal slip rate, n₀ is the real-time rotation speed of the reference shaft, kₚ₁ is the torque gain of the real-time rotation speed difference of the first drive shaft, β₁ is the angular acceleration of the first drive shaft, a is the acceleration of the multi-shaft vehicle, R₁ is the rolling radius of the first drive shaft, J₁ is the equivalent moment of inertia of the first drive shaft, and k_{d1} is the gain of the angular acceleration of the first drive shaft;
step 6: if it is judged that the two drive shafts are both in a slipping state, then the torque T₁ is subtracted from the real-time demand torque of the first drive shaft and a torque T₂ = (n₂ - (1 + s) × n₀) × kₚ₂ + (β₂ - (1 + s) × a/R₂) × J₂ × k_{d2} is subtracted from the real-time demand torque of the second drive shaft by means of the drive controller, to keep slip rates of the two drive shafts within a predetermined optimal slip rate range, wherein n₂ is the real-time rotation speed of the second drive shaft, s is the predetermined optimal slip rate, n₀ is the real-time rotation speed of the reference shaft, kₚ₂ is the torque gain of the real-time rotation speed difference of the second drive shaft, β₂ is the angular acceleration of the second drive shaft, a is the acceleration of the multi-shaft vehicle, R₂ is the rolling radius of the second drive shaft, J₂ is the equivalent moment of inertia of the second drive shaft, and k_{d2} is the gain of the angular acceleration of the second drive shaft;
step 7: if it is judged that neither of the two drive shafts is in a slipping state, then the real-time demand torque of each drive shaft is individually sent to the corresponding drive shaft directly by means of the drive controller;
step 8: if it is judged that the multi-shaft vehicle is in a travelling state, then real-time slip rates of the two drive shafts are monitored by means of the drive controller, and a slipping state of each drive shaft is judged according to whether the real-time slip rate of the corresponding drive shaft is greater than the predetermined optimal slip rate s; if the real-time slip rate of the corresponding drive shaft is greater than the predetermined optimal slip rate s, then it is judged that the corresponding drive shaft is in a slipping state; if the real-time slip rate of the corresponding drive shaft is less than or equal to the predetermined optimal slip rate s, then it is judged that the corresponding drive shaft is not in a slipping state;
step 9: if it is judged that the first drive shaft is in a slipping state, then the torque T₁ is subtracted from the real-time demand torque of the first drive shaft by means of the drive controller, and this subtracted torque T₁ is transferred to the non-slipping second drive shaft;
step 10: if it is judged that the two drive shafts are both in a slipping state, then the torque T₁ is subtracted from the real-time demand torque of the first drive shaft and the torque T₂ is subtracted from the real-time demand torque of the second drive shaft by means of the drive controller, to keep the slip rates of the two drive shafts within the predetermined optimal slip rate range; and
step eleven: if it is judged that neither of the two drive shafts is in a slipping state, then the real-time demand torque of each drive shaft is individually sent to the corresponding drive shaft directly by means of the drive controller.

2. Method for anti-slip control of torque between electric drive axle shafts of a multi-shaft vehicle, wherein the multi-shaft vehicle comprises multiple drive shafts; if the multi-shaft vehicle does not comprise a non-drive shaft, the drive shaft with the lowest rotation speed of the multiple drive shafts is selected as a reference shaft; if the multi-shaft vehicle further comprises at least one non-drive shaft, the only non-drive shaft or a non-drive shaft with a lower rotation speed of the at least one non-drive shaft is selected as a reference shaft; and the method comprises the following steps:
step one: determining a total real-time demand torque and a torque distribution factor of the multi-shaft vehicle periodically by means of a drive controller of the multi-shaft vehicle when the multi-shaft vehicle starts moving and during entry thereof into a travelling state, and computing a real-time demand torque of each of the multiple drive shafts on this basis;
step two: determining a real-time vehicle speed of the multi-shaft vehicle by means of the drive controller;
step three: judging, by means of the drive controller, whether the multi-shaft vehicle is in a state of starting to move or a travelling state, according to whether a real-time rotation speed of the reference shaft monitored by a rotation speed sensor of the multi-shaft vehicle is greater than a predetermined rotation speed value; if the real-time rotation speed of the reference shaft is less than or equal to the predetermined rotation speed value, it is judged that the multi-shaft vehicle is in a state of starting to move; if the real-time rotation speed of the reference shaft is greater than the predetermined rotation speed value, it is judged that the multi-shaft vehicle is in a travelling state;
step four: if it is judged that the multi-shaft vehicle is in a state of starting to move, then a real-time rotation speed difference between the real-time rotation speed of each drive shaft and the real-time rotation speed of the reference shaft is compared with a predetermined threshold by means of the drive controller, and a slipping state of the corre-sponding drive shaft is judged according to whether the real-time rotation speed dif-ference between the real-time rotation speed of the corresponding drive shaft and the real-time rotation speed of the reference shaft is greater than the predetermined threshold; if the real-time rotation speed difference between the real-time rotation speed of the corresponding drive shaft and the real-time rotation speed of the reference shaft is less than or equal to the predetermined threshold, then it is judged that the corresponding drive shaft is not in a slipping state; if the real-time rotation speed dif-ference between the real-time rotation speed of the corresponding drive shaft and the real-time rotation speed of the reference shaft is greater than the predetermined threshold, then it is judged that the corresponding drive shaft is in a slipping state;
step five: if it is judged that one or more drive shafts but not all of the multiple drive shafts is/are in a slipping state, then a torque Tₓ = (nₓ - (1 + s) × n₀) × kₚₓ + (βₓ - (1 + s) × a/Rₓ) × Jₓ × k_{dx} is subtracted from the real-time demand torque of each slipping drive shaft individually by means of the drive controller, and the sum of the subtracted torques Tₓ is transferred to another non-slipping drive shaft individually according to a certain ratio, according to the magnitude of a real-time slip rate of the other non-slipping drive shaft or according to an equal distribution ratio, to keep slip rates of the multiple drive shafts within a predetermined optimal slip rate range, wherein nₓ is the real-time rotation speed of the slipping (x)th drive shaft, s is a predetermined optimal slip rate, n₀ is the real-time rotation speed of the reference shaft, kₚₓ is the torque gain of the real-time rotation speed difference of the slipping (x)th drive shaft, βₓ is the angular acceleration of the slipping (x)th drive shaft, a is the acceleration of the multi-shaft vehicle, Rₓ is the rolling radius of the slipping (x)th drive shaft, Jₓ is the equivalent moment of inertia of the slipping (x)th drive shaft, and k_{dx} is the gain of the angular acceleration of the slipping (x)th drive shaft;
step six: if it is judged that the multiple drive shafts are all in a slipping state, then the torque Tₓ is subtracted from the real-time demand torque of each drive shaft individually by means of the drive controller, to keep the slip rates of the multiple drive shafts within the predetermined optimal slip rate range;
step seven: if it is judged that none of the multiple drive shafts is in a slipping state, then the real-time demand torque of each drive shaft is sent to the corresponding drive shaft directly by means of the drive controller;
step eight: if it is judged that the multi-shaft vehicle is in a travelling state, then real-time slip rates of the multiple drive shafts are monitored by means of the drive controller, and a slipping state of each drive shaft is judged according to whether the real-time slip rate of the corresponding drive shaft is greater than the predetermined optimal slip rate s; if the real-time slip rate of the corresponding drive shaft is greater than the predetermined optimal slip rate s, then it is judged that the corresponding drive shaft is in a slipping state; if the real-time slip rate of the corresponding drive shaft is less than or equal to the predetermined optimal slip rate s, then it is judged that the corresponding drive shaft is not in a slipping state;
step nine: if it is judged that one or more drive shafts but not all of the multiple drive shafts is/are in a slipping state, then the torque Tₓ is subtracted from the real-time demand torque of the slipping one or more drive shafts individually by means of the drive controller, and the sum of the subtracted torques Tₓ is transferred to another non-slipping drive shaft individually according to a certain ratio, according to the magnitude of a real-time slip rate of the other non-slipping drive shaft or according to an equal distribution ratio;
step ten: if it is judged that all of the multiple drive shafts are in a slipping state, then the torque Tₓ is subtracted from the real-time demand torque of each drive shaft individually by means of the drive controller, to keep the slip rates of the multiple drive shafts within the predetermined optimal slip rate range; and
step eleven: if it is judged that none of the drive shafts is in a slipping state, then the real-time demand torque of each drive shaft is individually sent to the corresponding drive shaft directly by means of the drive controller.

3. Method for anti-slip control of torque between electric drive axle shafts of a multi-shaft vehicle according to Claim 1 or 2, wherein the predetermined rotation speed value is 2 rpm or another predetermined rotation speed value calibrated through testing.

4. Method for anti-slip control of torque between electric drive axle shafts of a multi-shaft vehicle according to Claim 1 or 2, wherein, in the absence of wheel slip, the real-time vehicle speed of the multi-shaft vehicle = the average value of the product of the real-time rotation speed of each drive shaft of the multi-shaft vehicle and the rolling radius of each wheel tyre corresponding to each drive shaft; if wheel slip is present, the real-time vehicle speed of the multi-shaft vehicle = vehicle speed before wheel slip + the integral of acceleration of the multi-shaft vehicle after wheel slip.

5. Method for anti-slip control of torque between electric drive axle shafts of a multi-shaft vehicle according to Claim 1 or 2, wherein the real-time slip rate Slipₓ of the (x)th drive shaft among the drive shafts = (Vm - V)/V × 100%, wherein V is the real-time vehicle speed of the multi-shaft vehicle, and Vm is the product of the real-time rotation speed of the (x)th drive shaft among the drive shafts of the multi-shaft vehicle and the rolling radius of the wheel tyre corresponding to the (x)th drive shaft.

6. Method for anti-slip control of torque between electric drive axle shafts of a multi-shaft vehicle according to Claim 1 or 2, wherein the real-time slip rate Slipₓ of the (x)th drive shaft among the drive shafts = (real-time rotation speed of the (x)th drive shaft × rolling radius of the wheel tyre corresponding to the (x)th drive shaft/ real-time rotation speed of the reference shaft × rolling radius of the wheel tyre corresponding to the reference shaft) - 1.

7. Method for anti-slip control of torque between electric drive axle shafts of a multi-shaft vehicle according to Claim 1 or 2, wherein the predetermined threshold is 20%, or another threshold which is set as needed.

8. Method for anti-slip control of torque between electric drive axle shafts of a multi-shaft vehicle according to Claim 1 or 2, wherein the predetermined optimal slip rate s is 20%, or another value which is set as needed.

9. Method for anti-slip control of torque between electric drive axle shafts of a multi-shaft vehicle according to Claim 1 or 2, wherein the predetermined optimal slip rate range is 8 - 25%, preferably 10 - 20%, more preferably 8 - 15%.

10. Device for anti-slip control of torque between electric drive axle shafts of a multi-shaft vehicle, wherein the multi-shaft vehicle comprises multiple drive shafts; if the multi-shaft vehicle does not comprise a non-drive shaft, the drive shaft with the lowest rotation speed of the multiple drive shafts is selected as a reference shaft; if the multi-shaft vehicle further comprises at least one non-drive shaft, the only non-drive shaft or a non-drive shaft with a lower rotation speed of the at least one non-drive shaft is selected as the reference shaft; and the device for anti-slip control of torque between electric drive axle shafts of a multi-shaft vehicle comprises:
a real-time demand torque computing module, configured to determine a total real-time demand torque and a torque distribution factor TSF of the multi-shaft vehicle periodically when the multi-shaft vehicle starts moving and during entry thereof into a travelling state, and compute a real-time demand torque of each of the multiple drive shafts on this basis;
a real-time vehicle speed determining module, configured to determine a real-time vehicle speed of the multi-shaft vehicle;
a vehicle state determining module, configured to judge whether the multi-shaft vehicle is in a state of starting to move or a travelling state, according to whether a real-time rotation speed of the reference shaft monitored by a rotation speed sensor is greater than a predetermined rotation speed value, wherein, if the real-time rotation speed of the reference shaft is less than or equal to the predetermined rotation speed value, it is judged that the multi-shaft vehicle is in a state of starting to move; and if the real-time rotation speed of the reference shaft is greater than the predetermined rotation speed value, it is judged that the multi-shaft vehicle is in a travelling state;
a first drive shaft state judgement module, configured to compare a real-time rotation speed difference between the real-time rotation speed of each drive shaft and the real-time rotation speed of the reference shaft with a predetermined threshold when the multi-shaft vehicle is in a state of starting to move, and judge a slipping state of the corresponding drive shaft according to whether the real-time rotation speed difference between the real-time rotation speed of the corresponding drive shaft and the real-time rotation speed of the reference shaft is greater than the predetermined threshold, wherein, if the real-time rotation speed difference between the real-time rotation speed of the corresponding drive shaft and the real-time rotation speed of the reference shaft is less than or equal to the predetermined threshold, then it is judged that the corresponding drive shaft is not in a slipping state; and if the real-time rotation speed difference between the real-time rotation speed of the corresponding drive shaft and the real-time rotation speed of the reference shaft is greater than the predetermined threshold, then it is judged that the corresponding drive shaft is in a slipping state;
a first torque distribution module, configured to subtract a torque Tₓ = (nₓ - (1 + s) × n₀) × kₚₓ + (βₓ - (1 + s) × a/Rₓ) × Jₓ × k_{dx} from the real-time demand torque of each slipping drive shaft individually when the multi-shaft vehicle is in a state of starting to move and one or more but not all of the multiple drive shafts is/are in a slipping state, and transfer the sum of the subtracted torques Tₓ to another non-slipping drive shaft individually according to a certain ratio, according to the magnitude of a real-time slip rate of the other non-slipping drive shaft or according to an equal distribution ratio, to keep slip rates of the multiple drive shafts within a predetermined optimal slip rate range, wherein
nₓ is the real-time rotation speed of the slipping (x)th drive shaft;
s is a predetermined optimal slip rate;
n₀ is the real-time rotation speed of the reference shaft;
kₚₓ is the torque gain of the real-time rotation speed difference of the slipping (x)th drive shaft;
βₓ is the angular acceleration of the slipping (x)th drive shaft;
a is the acceleration of the multi-shaft vehicle;
Rₓ is the rolling radius of the slipping (x)th drive shaft;
Jₓ is the equivalent moment of inertia of the slipping (x)th drive shaft; and
k_{dx} is the gain of the angular acceleration of the slipping (x)th drive shaft;
a second torque distribution module, configured to subtract Tₓ from the real-time demand torque of each drive shaft individually when the multi-shaft vehicle is in a state of starting to move and the multiple drive shafts are all in a slipping state, to keep the slip rates of the multiple drive shafts within a predetermined optimal slip rate range;
a third torque distribution module, configured to send the real-time demand torque of each drive shaft to the corresponding drive shaft directly when the multi-shaft vehicle is in a state of starting to move and none of the multiple drive shafts is in a slipping state;
a second drive shaft state judgement module, configured to monitor real-time slip rates of the multiple drive shafts when the multi-shaft vehicle is in a travelling state, and judge a slipping state of each drive shaft according to whether the real-time slip rate of the corresponding drive shaft is greater than a predetermined optimal slip rate s, wherein, if the real-time slip rate of the corresponding drive shaft is greater than the predetermined optimal slip rate s, then it is judged that the corresponding drive shaft is in a slipping state; and if the real-time slip rate of the corresponding drive shaft is less than or equal to the predetermined optimal slip rate s, then it is judged that the corresponding drive shaft is not in a slipping state;
a fourth torque distribution module, configured to subtract the torque Tₓ from the real-time demand torque of the slipping one or more drive shafts individually when the multi-shaft vehicle is in a travelling state and one or more drive shafts but not all of the multiple drive shafts is/are in a slipping state, and
transfer the sum of the subtracted torques Tₓ to another non-slipping drive shaft individually according to a certain ratio, according to the magnitude of a real-time slip rate of the other non-slipping drive shaft or according to an equal distribution ratio;
a fifth torque distribution module, configured to subtract the torque Tₓ from the real-time demand torque of each drive shaft individually when the multi-shaft vehicle is in a travelling state and the multiple drive shafts are all in a slipping state, to keep the slip rates of the multiple drive shafts within the predetermined optimal slip rate range; and
a sixth torque distribution module, configured to send the real-time demand torque of each drive shaft individually to the corresponding drive shaft directly when the multi-shaft vehicle is in a travelling state and none of the drive shafts is in a slipping state.

11. Device for anti-slip control of torque between electric drive axle shafts of a multi-shaft vehicle, wherein the multi-shaft vehicle comprises multiple drive shafts; if the multi-shaft vehicle does not comprise a non-drive shaft, the drive shaft with the lowest rotation speed of the multiple drive shafts is selected as a reference shaft; if the multi-shaft vehicle further comprises at least one non-drive shaft, the only non-drive shaft or a non-drive shaft with a lower rotation speed of the at least one non-drive shaft is selected as the reference shaft; and the device for anti-slip control of torque between electric drive axle shafts of a multi-shaft vehicle comprises:
multiple rotation speed sensors, for individually monitoring real-time rotation speeds of each of the multiple drive shafts and the at least one non-drive shaft; and
a drive controller, connected to the multiple rotation speed sensors and comprising:
a memory for storing an instruction; and
a processor coupled to the memory, wherein the instruction, when executed by the processor, causes the processor to perform the method according to any one of Claims 1 - 9.

12. Computer-readable storage medium, having stored thereon an instruction which, when executed by a processor, causes the processor to perform the method according to any one of Claims 1 - 9.

13. Computer program product, comprising an instruction which, when executed by a processor, causes the processor to perform the method according to any one of Claims 1 - 9.
